# EUROPÄISCHE PATENTSCHRIFT

(11) **EP 1 039 158 B1**
(45) Veröffentlichungstag und Bekanntmachung des Hinweises auf die Patenterteilung: **19.04.2006**
(21) Anmeldenummer: 00103615.1
(22) Anmeldetag: 21.02.2000
(51) Int. Cl.: F16C 29/06, F16C 29/08

(54) **Linearwälzlagerelement**
Linear rolling bearing
Palier linéaire à éléments roulants

(30) Priorität: 25.03.1999 DE 19913481; 22.05.1999 DE 19923719
(43) Veröffentlichungstag der Anmeldung: 27.09.2000
(73) Patentinhaber: Schaeffler KG, 91074 Herzogenaurach (DE)
(72) Erfinder: Menges, Martin, Dipl.-Ing., 66424 Homburg (DE)

(56) Entgegenhaltungen:
- DE-A- 4 331 014
- FR-A- 2 543 233
- FR-A- 2 714 942
- US-A- 3 704 919
- US-A- 4 293 166
- US-A- 4 983 048

## Beschreibung

### Gebiet der Erfindung

Die Erfindung betrifft ein Linearwälzlagerelement für die Lagerung an der Lauffläche einer Führungsschiene, mit einem Führungswagen, der für einen Wälzkörperumlauf jeweils in einem Tragkörper eine Tragzone und einen Rücklaufkanal aufweist, die über zwei an dem Tragkörper stirnseitig angrenzende Umlenkkanäle miteinander verbunden sind, wobei in der Tragzone, dem Rücklaufkanal und den Umlenkkanälen Führungsmittel aus einem polymeren Werkstoff für die Wälzkörper angeordnet sind, von welchen die Führungsmittel der Tragzone und des Rücklaufkanals in Form einer Beschichtung ausgeführt sind, die an dem Tragkörper in einem einzigen Arbeitsgang durch Spritzgießen angebracht ist, wobei die Umlenkkanäle zumindest teilweise von Umlenkkörpern gebildet sind, welche in den Bereichen der beiden Stirnseiten des Tragkörpers lösbar befestigt sind.

### Hintergrund der Erfindung

Bei standardmäßigen Linearlagem mit umlaufenden Wälzkörpern, wie Kugel-, Nadel- oder Rollenumlaufführungen bzw. Umlaufschuhen wird der Bereich der Wälzkörperumlenkung, welcher außerhalb des Tragkörpers liegt, durch ein als Kopfstück bezeichnetes separates Bauteil geschützt. Dieses muß bei der Montage relativ zum Tragkörper ausgerichtet und dort fixiert werden, damit z. B. die Dichtheit der Nachschmiervorrichtung gewährleistet ist.

Aus der gattungsbildenden Patentschrift DE 43 31 014 A1 ist ein Linearwälzlagerelement der eingangs genannten Art bekannt, welches Kopfstücke aufweist, in welchen die Umlenkkörper angeordnet sind. Hier sind bei der Montage folgende Arbeitsgänge erforderlich: Zunächst muß ein Ausrichten des Kopfstückes an dem Tragkörper durchgeführt werden, was von Hand oder in einer Vorrichtung erfolgt. Danach ist eine Sichtprüfung oder eine Prüfung mittels einer Lehre erforderlich, um festzustellen, ob ein korrekter Sitz des Kopfstücks an dem Tragkörper erreicht wurde. Dadurch ergibt sich ein großer Bearbeitungsaufwand für das Lagerelement. Außerdem erhöhen die an den beiden stirnseitigen Enden des Tragkörpers montierten Kopfstücke des Lagerelementes, dessen Bauzeitgewicht.

Das Dokument US 4 983 048 A zeigt ein Linearwälzlagerelement, bei welchem die tragenden Wälzkörper an der inneren Oberfläche einer Bohrung des (metallischen) Tragkörpers unmittelbar abgestützt sind, während Kanäle für die rücklaufenden Wälzkörper ebenfalls von Bohrungen des Tragkörpers gebildet sind. Eine polymere Beschichtung als Führungsmittel der Tragzone und des Rücklaufkanals weist dieses Lager nicht auf. Aufnahmeräume für Umlenkkörper sind von stirnseitigen Stufenbohrungen des (metallischen) Tragkörpers gebildet.

### Zusammenfassung der Erfindung

Der Erfindung liegt die Aufgabe zugrunde, ein Linearwälzlagerelement der eingangs genannten Art zu schaffen, für dessen Herstellung die Montage- und Lagerhaltungskosten sowie der Montage- und Prüfaufwand verringert sind.

Diese Aufgabe wird erfindungsgemäß dadurch gelöst, daß jeweils ein Umlenkkörper vollständig in einem in dem Tragköper ausgebildeten, von einer Stirnseite zugänglichen Aufnahmeraum eingesteckt ist, wobei mit dem polymeren Werkstoff der Beschichtung, welche die Führungsmittel der Tragzone und des Rücklaufkanals bildet, zusätzlich jeweils ein stirnseitiger Tragkörperansatz geformt ist, welcher den Aufnahmeraum für den Umlenkkörper umschließt. Auf diese Weise können stirnseitige Kopfstücke entfallen. Der erforderliche Aufnahmeraum für die Umlenkkörper wird durch ein Verlängem des Tragkörpers, der ein Stahlbauteil sein kann, und durch ein entsprechendes stirnseitiges Bearbeiten des Tragkörpers geschaffen. Die Anwendung der Ausspritztechnik ermöglicht es, innerhalb des Bauraums des Tragkörpers die Umlenkzone für die Wälzkörper in Kunststoff auszubilden. Der vollständige Wälzkörperumlauf befindet sich nun im Tragkörper. Der Aufnahmeraum kann mittels eines an dem Tragkörper unmittelbar anliegenden Abstreifers verschlossen sein. Dabei kann der Abstreifer jeweils von einer inneren Halteplatte, einer äußeren Halteplatte, einem Dichtungsstreifen und einer Trägerplatte gebildet sein, die gemeinsam mittels Schrauben an dem Tragkörper befestigt sind, wobei die innere Halteplatte an der Stirnseite des Tragkörpers unmittelbar anliegend oder im Tragkörper versenkt angeordnet ist. Im Falle der versenkten Anordnung ergibt sich ein bündiger Abschluß mit dem Tragkörper.

Es ist auch möglich, mit dem polymeren Werkstoff der Beschichtung, welche die Führungsmittel der Tragzone und des Rücklaufkanals bildet, zusätzlich jeweils einen stirnseitigen Tragkörperansatz zu formen, welcher den Aufnahmeraum für den Umlenkkörper umschließt. In diesem Fall kann die innere Halteplatte des Abstreifers an einer in dem Tragkörperansatz ausgebildeten Anlagefläche abgestützt sein.

Gegenüber dem vorbekannten Stand der Technik ergeben sich mit der Erfindung als zusätzliche Vorteile eine Erhöhung der Crash-Sicherheit des Führungswagens, eine Steigerung der Bruchfestigkeit des Führungswagens, das Entfallen von Trennfugen, die sich vorher zwischen den Kopfstücken und dem Tragkörper befanden, was auch die Schmutzunempfindlichkeit vergrößert, und eine Erhöhung der Bausteifigkeit. Dabei bleibt der Gesamtbauraum des Führungswagens unverändert.

### Kurze Beschreibung der Zeichnung

Ein Ausführungsbeispiel der Erfindung ist in der Zeichnung dargestellt und wird im folgenden näher beschrieben. Es zeigen:
- Figur 1: eine stirnseitige Ansicht eines an einer Führungsschiene längsverschieblich angeordneten erfindungsgemäßen Lagerelementes;.
- Figur 2: eine Draufsicht auf das Lagerelement gemäß Figur 1;
- Figur 3: das erfindungsgemäße Lagerelement in einem vergrößerten Schnitt gemäß den Linien III-III der Figuren 1 und 4;
- Figur 4: eine gegenüber Figur 1 vergrößerte stirnseitige Ansicht des Tragkörpers des Lagerelementes mit teilweisem Querschnitt und
- Figur 5: ein gegenüber Figur 3 abgewandeltes erfindungsgemäßes Lagerelement mit einem Tragkörper, der aus polymerem Werkstoff angeformte Tragkörperansätze aufweist.

### Ausführliche Beschreibung der Zeichnung

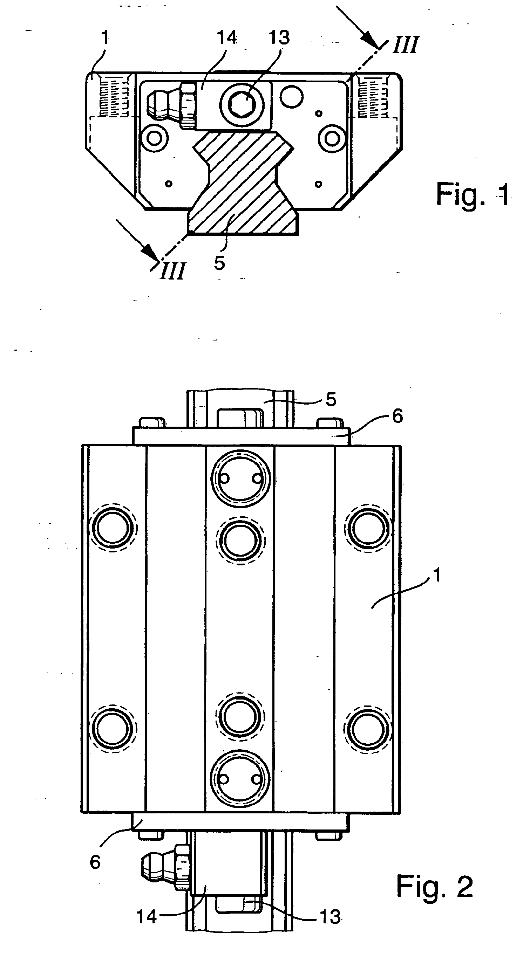

Ein in den Figuren 1 bis 4 dargestelltes erfindungsgemäßes Lagerelement weist einen Tragkörper 1 mit stirnseitigen Aufnahmeräumen 2 auf. In jeden Aufnahmeraum 2 ist ein Umlenkkörper 3 eingesteckt, der die Umlenkung von Wälzkörpern 4 aus einem Tragbereich in einem Rücklaufbereich des Lagerelementes bzw. aus dem Rücklaufbereich in den Tragbereich bewirkt. Das Lagerelement ist längs einer Führungsschiene 5 geradlinig verfahrbar. Jeder Aufnahmeraum 2 ist nach dem Einsetzen des Umlenkkörpers 3 an der jeweiligen Stirnseite des Tragkörpers 1 mit einem Abstreifer 6 verschlossen, der für die Abstreifung von Verunreinigungen, beispielsweise Metallspänen, von der Lauffläche 7 der Führungsschiene 5 sorgt, auf der die als Zylinderrollen ausgebildeten Wälzkörper 4 abrollen. Der Abstreifer 6 dient außerdem zum Abdichten des mit Schmierstoff versehenen Innenraumes des Lagerelementes nach außen und enthält eine innere Halteplatte 8, eine äußere Halteplatte 9, eine Trägerplatte 12 und einen Dichtungsstreifen 10. Diese Teile sind im Ausführungsbeispiel aus einem polymeren Werkstoff hergestellt.

Zwischen den beiden Halteplatten 8 und 9 befinden sich in dem Abstreifer 6 Schmierstoffkanäle 11, über welche Schmierstoff in den Bereich der Wälzkörper 4 des Lagerelementes eingefördert wird. Die beiden Halteplatten 8 und 9 werden von der Trägerplatte 12 in ihrer Lage gehalten, welche mit dem Dichtungsstreifen 10 an dem Tragkörper 1 des Lagerelementes jeweils stirnseitig angesetzt und dort mit Schrauben 13 befestigt ist. Mit einer dieser Schrauben 13 ist gleichzeitig ein Schmiernippelträger 14 mit einem Schmiernippel an der Trägerplatte 12 befestigt.

Der über den Schmiernippel eingeförderte Schmierstoff gelangt über die Schmierstoffkanäle 11 und Durchtrittsbohrungen 15 der inneren Halteplatte 8 sowie über Durchtrittskanäle 16 des Umlenkkörpers 3 zu den Wälzkörpern 4. Die Abdichtung der Durchtrittsbohrung 15 und des Durchtrittskanals 16 zwischen-der inneren Halteplatte 8 und dem Umlenkkörper 3 ist mit einem Dichtungsring 17 durchgeführt, der einen den Durchtrittskanal 16 enthaltenden Stutzen umgibt.

Der Tragbereich und der Rücklaufbereich für die Wälzkörper 4 sind in dem Tragkörper 1 des Lagerelementes jeweils als geradlinige Tragzone 18 und dazu paralleler Rücklaufkanal 19 ausgeführt. Sie werden von einer zusammenhängenden, den metallischen Werkstoff des Tragkörpers 1 umgebenden Beschichtung 20 aus einem polymeren Werkstoff begrenzt. Diese weist in bezug auf die Wälzkörper 4 radiale Führungsflächen 21 und 22 sowie axiale Führungsflächen auf. In die Beschichtung 20 sind Schmierstoffkanäle 23 und 24 in Form von Nuten eingearbeitet, die zu den Wälzkörpern 4 hin offen sind. Die Schmierstoffkanäle 23 und 24 befinden sich in dem Rücklaufkanal 19 des Tragkörpers 1 und in einem Umlenkkanal 25 des Umlenkkörpers 3 für die Wälzkörper 4. Sie sind in eine Umlenkbahn des Umlenkkörpers 3 eingeformt.

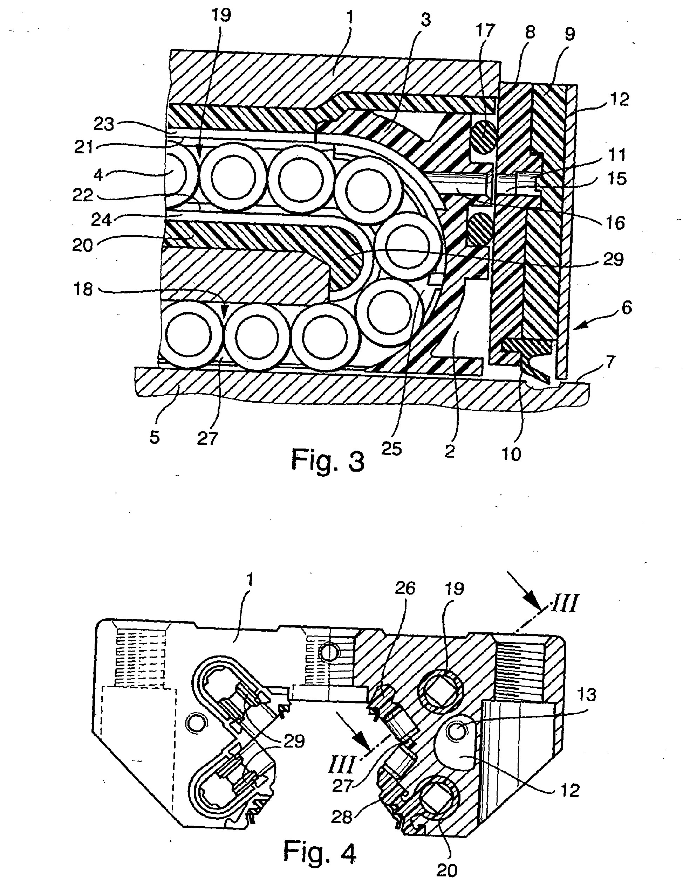

An dem Tragkörper 1, der die Führungsschiene 5 U-förmig umgreift, erstreckt sich die Beschichtung 20 nicht nur auf die Rücklaufkanäle 19, sondern auch auf die Tragzone 18. Hier ist die Beschichtung 20 in Form von Führungsstegen für die Wälzkörper 4 ausgebildet. Im Ausführungsbeispiel gibt es für die Wälzkörperumläufe einen oberen Führungssteg 26, einen mittleren Führungssteg 27 und einen unteren Führungssteg 28. Im Umlenkbereich sind der obere Führungssteg 26 mit dem Teil der Beschichtung 20, die sich in dem oberen Rücklaufkanal 19 befindet und der untere Führungssteg 28 mit dem Teil der Beschichtung 20, die sich in den unteren Rücklaufkanal 19 befindet, über Umlenkstege 29 verbunden, die in den Umlenkbereichen den Tragkörper 1 umgeben. Der mittlere Führungssteg 27 ist auf diese Weise mit den Teilen der Beschichtung 20 in den beiden übereinander angeordneten Rücklaufkanälen 19 verbunden, wie man auf der rechten Seite der Figur 4 erkennen kann.

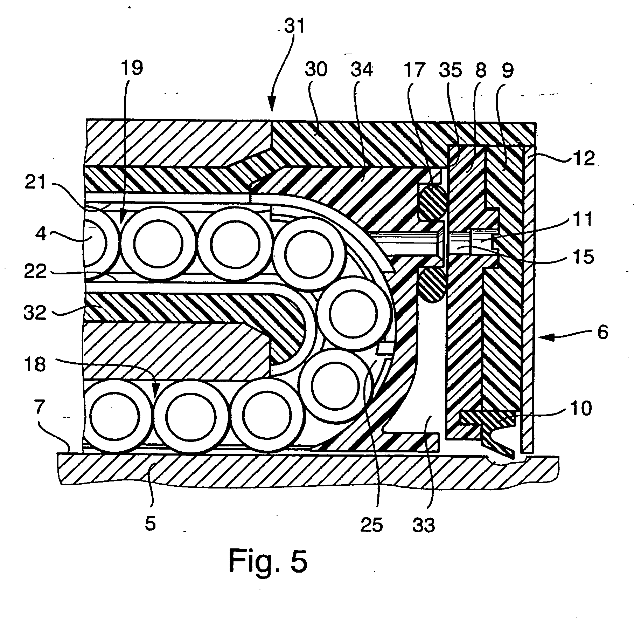

Das in Figur 5 dargestellte Linearwälzlagerelement ist grundsätzlich ebenso aufgebaut, so daß für gleiche Bauteile dieselben Bezugszahlen verwendet worden sind. Es unterscheidet sich von dem Lagerelement nach den Figuren 1 bis 4 dadurch, daß der Tragkörper 31 mit stirnseitigen Tragkörperansätzen 30 versehen ist. Diese sind aus dem polymeren Werkstoff geformt, der gleichzeitig auch die Beschichtung 32 in der Tragzone 18, dem Rücklaufkanal 19 und dem Umlenkkanal 25 bildet. Ein Tragkörperansatz 30 enthält jeweils einen Aufnahmeraum 33 für einen Umlenkkörper 34. Der Abstreifer 6 ist mit der inneren Halteplatte 8, der äußeren Halteplatte 9, dem Dichtungsstreifen 10 und der Trägerplatte 12 vollständig in dem Aufnahmeraum 33 angeordnet und mit Schrauben an dem Tragkörper 31 befestigt. Dabei stützt sich die innere Halteplatte 8 an einer Anlagefläche 35 ab, die innerhalb des Aufnahmeraumes 33 an dem Tragkörperansatz 30 ausgebildet ist.

### Bezugszahlenliste

- 1: Tragkörper
- 2: Aufnahmeraum
- 3: Umlenkkörper
- 4: Wälzkörper
- 5: Führungsschiene
- 6: Abstreifer
- 7: Lauffläche
- 8: innere Halteplatte
- 9: äußere Halteplatte
- 10: Dichtungsstreifen
- 11: Schmierstoffkanal
- 12: Trägerplatte
- 13: Schraube
- 14: Schmiernippelträger
- 15: Durchtrittsbohrung
- 16: Durchtrittskanal
- 17: Dichtungsring
- 18: Tragzone
- 19: Rücklaufkanal
- 20: Beschichtung
- 21: Führungsfläche
- 22: Führungsfläche
- 23: Schmierstoffkanal
- 24: Schmierstoffkanal
- 25: Umlenkkanal
- 26: oberer Führungssteg
- 27: mittlerer Führungssteg
- 28: unterer Führungssteg
- 29: Umlenksteg
- 30: Tragkörperansatz
- 31: Tragkörper
- 32: Beschichtung
- 33: Aufnahmeraum
- 34: Umlenkkörper
- 35: Anlagefläche

## Patentansprüche

1. Linearwälzlagerelement für die Lagerung an der Lauffläche einer Führungsschiene (5), mit einem Führungswagen, der für einen Wälzkörperumlauf jeweils in einem Tragkörper (1, 31) eine Tragzone (18) und einen Rücklaufkanal (19) aufweist, die über zwei an dem Tragkörper (1, 31) stirnseitig angrenzende Umlenkkanäle (25) miteinander verbunden sind, wobei in der Tragzone (18), dem Rücklaufkanal (19) und den Umlenkkanälen (25) Führungsmittel aus einem polymeren Werkstoff für die Wälz körper (4) angeordnet sind, von welchen die Führungsmittel der Tragzone (18) und des Rücklaufkanals (19) in Form einer Beschichtung (20, 32) ausgeführt sind, die an dem Tragkörper (1, 31) in einem einzigen Arbeitsgang durch Spritzgießen angebracht ist, wobei die Umlenkkanäle (25) zumindest teilweise von Umlenkkörpern (3, 34) gebildet sind, welche in den Bereichen der beiden Stirnseiten des Tragkörpers (1, 31) lösbar befestigt sind, **dadurch gekennzeichnet, daß** jeweils ein Umlenkkörper (3, 34) vollständig in einem in dem Tragkörper (1, 31) ausgebildeten, von einer Stirnseite zugänglichen Aufnahmeraum (2, 33) eingesteckt ist, wobei mit dem polymeren Werkstoff der Beschichtung (20, 32), welche die Führungsmittel der Tragzone (18) und des Rücklaufkanals (19) bildet, zusätzlich jeweils ein stimseitiger Tragkörperansatz (30) geformt ist, welcher den Aufnahmeraum (2, 33) für den Umlenkkörper (3, 34) umschließt.

2. Lagerelement nach Anspruch 1, **dadurch** gekenntzeichnet, daß der Aufnahmeraum (2) mittels eines an dem Tragkörper (1) unmittelbar anliegenden Abstreifers (6) nach außen verschlossen ist.

3. Lagerelement nach Anspruch 1, **dadurch gekennzeichnet, daß** in dem Aufnahmeraum (33) ein Abstreifer (6) angeordnet ist, mit welchem der Aufnahmeraum (33) nach außen verschlossen ist.

4. Lagerelement nach Anspruch 2, **dadurch gekennzeichnet, daß** der Abstreifer (6) jeweils von einer inneren Halteplatte (8), einer äußeren Halteplatte (9), einem Dichtungsstreifen (10) und einer Trägerplatte (12) gebildet ist, die gemeinsam mittels Schrauben (13) an dem Tragkörper (1) befestigt sind, wobei die innere Halteplatte (8) an der Stirnseite des Tragkörpers (1) unmittelbar anliegend angeordnet ist.

5. Lagerelement nach Anspruch 3, **dadurch gekennzeichnet, daß** der Abstreifer (6) jeweils von einer inneren Halteplatte (8), einer äußeren Halteplatte (9), einem Dichtungsstreifen (10) und einer Trägerplatte (12) gebildet ist, die gemeinsam mittels Schrauben (13) an dem Tragkörper (31) befestigt sind, wobei die innere Halteplatte (8) an einer in dem Tragkörperarisatz (30) ausgebildeten Anlagefläche (35) abgestützt ist.

## Claims

1. Linear roller bearing element for mounting on the running surface of a guide rail (5), having a guide carriage which has a supporting zone (18) and a return channel (19) in each case in a supporting body (1, 31) for rolling-body circulation, the said supporting zone (18) and the said return channel (19) being connected to one another via two deflection channels (25) which adjoin the end side of the supporting body (1, 31), guide means made from a polymeric material being arranged for the rolling bodies (4) in the supporting zone (18), the return channel (19) and the deflection channels (25), of which guide means the guide means of the supporting zone (18) and the return channel (19) are configured in the form of a coating (20, 32) which is applied to the supporting body (1, 31) in a single operation by injection moulding, the deflection channels (25) being formed at least partially by deflection bodies (3, 34) which are fastened releasably in the regions of the two end sides of the supporting body (1, 31), **characterized in that** in each case one deflection body (3, 34) is plugged completely into a receptacle space (2, 33) which is formed in the supporting body (1, 31) and is accessible from an end side, in each case one end-side supporting-body projection (30) being shaped with the polymeric material of the coating (20, 32) which forms the guide means of the supporting zone (18) and the return channel (19), the said supporting-body projection (30) surrounding the receptacle space (2, 33) for the deflection body (3, 34).

2. Bearing element according to Claim 1, **characterized in that** the receptacle space (2) is closed to the outside by means of a stripper (6) which bears directly on the supporting body (1).

3. Bearing element according to Claim 1, **characterized in that** a stripper (6) is arranged in the receptacle space (33), with which stripper (6) the receptacle space (33) is closed to the outside.

4. Bearing element according to Claim 2, **characterized in that** the stripper (6) is formed in each case by an inner holding plate (8), an outer holding plate (9), a sealing strip (10) and a supporting plate (12) which are jointly fastened to the supporting body (1) by means of screws (13), the inner holding plate (8) being arranged so as to bear directly on the end side of the supporting body (1).

5. Bearing element according to Claim 3, **characterized in that** the stripper (6) is formed in each case by an inner holding plate (8), an outer holding plate (9), a sealing strip (10) and a supporting plate (12) which are jointly fastened to the supporting body (31) by means of screws (13), the inner holding plate (8) being supported on a contact surface (35) which is formed in the supporting-body projection (30).

## Revendications

1. Palier linéaire à éléments roulants pour l'appui sur la face de roulement d'un rail de guidage (5), avec un chariot de guidage qui comporte chaque fois dans un corps porteur (1, 31), pour une circulation des éléments roulants, une zone porteuse (18) et un canal de retour (19), qui sont reliés l'un à l'autre par deux canaux de déviation (25) à proximité du côté frontal sur le corps porteur (1, 31), dans lequel des moyens de guidage en un matériau polymère pour les éléments roulants (4) sont disposés dans la zone porteuse (18), le canal de retour (19) et les canaux de déviation (25), parmi lesquels les moyens de guidage de la zone porteuse (18) et du canal de retour (19) sont réalisés sous forme d'un revêtement (20, 32) qui est déposé en une seule opération par moulage par projection sur le corps porteur (1, 31), dans lequel les canaux de déviation (25) sont au moins en partie formés par des corps de déviation (3, 34) qui sont fixés de façon détachable dans les régions des deux faces frontales du corps porteur (1, 31), **caractérisé en ce qu'**un corps de déviation (3, 34) est chaque fois enfoncé entièrement dans un espace de réception (2, 33) formé dans le corps porteur (1, 31) et accessible par une face frontale, dans lequel, avec le matériau polymère du revêtement (20, 32), qui forme les moyens de guidage de la zone porteuse (18) et du canal de retour (19), on forme en outre chaque fois un bout frontal (30) du corps porteur qui entoure l'espace de réception (2, 33) pour le corps de déviation (3, 34).

2. Palier selon la revendication 1, **caractérisé en ce que** l'espace de réception (2) est fermé vers l'extérieur au moyen d'un racloir (6) appliqué directement sur le corps porteur (1).

3. Palier selon la revendication 1, **caractérisé en ce qu'**un racloir (6), avec lequel l'espace de réception (33) est fermé vers l'extérieur, est disposé dans l'espace de réception (33).

4. Palier selon la revendication 2, **caractérisé en ce que** le racloir (6) est chaque fois formé d'une plaque de maintien interne (8), d'une plaque de maintien externe (9), d'une bande d'étanchéité (10) et d'une plaque de support (12), qui sont fixées ensemble au corps porteur (1) au moyen de vis (13), dans lequel la plaque de maintien interne (8) est disposée en application directe sur la face frontale du corps porteur (1).

5. Palier selon la revendication 3, **caractérisé en ce que** le racloir (6) est chaque fois formé d'une plaque de maintien interne (8), d'une plaque de maintien externe (9), d'une bande d'étanchéité (10) et d'une plaque de support (12), qui sont fixées ensemble au corps porteur (31) au moyen de vis (13), dans lequel la plaque de maintien interne (8) est supportée sur une face d'appui (35) formée dans le bout de corps porteur (30).
